# EUROPÄISCHE PATENTSCHRIFT

(11) **EP 0 838 600 B1**
(45) Veröffentlichungstag und Bekanntmachung des Hinweises auf die Patenterteilung: **16.02.2000**
(21) Anmeldenummer: 97111414.5
(22) Anmeldetag: 05.07.1997
(51) Int. Cl.: F16B 21/16, F16B 5/06

(54) **Kugelspannbolzen**
Ball locking pin
Broche de serrage à billes

(30) Priorität: 23.10.1996 DE 19643708
(43) Veröffentlichungstag der Anmeldung: 29.04.1998
(73) Patentinhaber: ERWIN HALDER KG, D-88480 Achstetten-Bronnen (DE)
(72) Erfinder: Halder, Werner, 88480 Achstetten-Bronnen (DE); Hummel, Dieter, 88339 Bad Waldsee (DE)
(74) Vertreter: Dziewior, Joachim, Dipl.-Phys. Dr.

(56) Entgegenhaltungen:
- WO-A-90/02011
- DE-B- 1 258 664
- GB-A- 971 537
- US-A- 3 596 554

## Beschreibung

Die Erfindung betrifft einen Kugelspannbolzen zur lösbaren Verbindung zweier jeweils eine Bohrung aufweisender Teile, insb. zweier Platten, mit einem Griff, einem durch die Bohrungen durchsteckbaren, relativ zum Griff gegen die Kraft einer ersten Feder verschiebbaren Fixierbolzen, der an seinem freien Ende ein Verriegelungselement aufweist, das durch einen relativ zum Fixierbolzen verschiebbaren Stößel aus einer den Durchtritt des Fixierbolzens durch die Bohrungen sperrenden Sperrstellung, in der die beiden Teile zwischen dem Griff und dem Verriegelungselement gehalten sind, in eine den Durchtritt freigebende, in eine Ausnehmung des Stößels reichende Lösestellung verstellbar ist, wobei zwischen dem Stößel und dem Fixierbolzen eine zweite Feder angeordnet ist und die Ausnehmung auf der dem Verriegelungselement zugewandten Seite eine zur Stößelachse geneigt verlaufende Seitenwand aufweist, auf der das Verriegelungselement in die Ausnehmung gleiten kann.

Aus der Praxis bekannte Kugelspannbolzen befinden sich im Ruhezustand in der Sperrstellung. Um nun zwei Platten miteinander zu verbinden, wird zunächst der Stößel relativ zum Fixierbolzen soweit verstellt, daß das Verriegelungselement in die Ausnehmung des Stößels eintreten kann, wo es sich dann in der Lösestellung befindet. Daraufhin wird der Fixierbolzen relativ zum Griff weiterverschoben und durch die Bohrungen in den Platten gesteckt. Eine sichere Verbindung der Platten liegt aber erst vor, wenn nach dem Loslassen des Stößels das Verriegelungselement aus der Lösestellung wieder in die Sperrstellung überführt ist. Bis dahin kann von dem Kugelspannbolzen keine in axialer Richtung wirkende Spannkraft aufgebracht werden, so daß in diesem Stadium der Herstellung der Verbindung der Kugelspannbolzen nur als Kugelsperrbolzen wirkt.

In der GB-A-971 537 ist ein Kugelsperrbolzen beschrieben, bei dem der Stößel mit einem Kolben verbunden ist, der durch ein Druckmittel betätigt in einer Kammer axial nach vorn verstellt werden kann, dabei den Stößel mitnimmt und die zweite Feder spannt. In dieser Stellung des Stößels kann das Verriegelungselement in die Ausnehmung eintreten und der Fixierbolzen durch die Bohrungen durchgesteckt werden, so daß nach Entfernen des Druckes die zweite Feder die beiden Teile verbindet, also der Erzeugung der Spannkraft dient. Zwischen einer Trägerplatte und dem Fixierbolzen ist eine Auswurffeder angeordnet, wobei der Fixierbolzen axial relativ zur Trägerplatte verstellbar ist, so daß unter der Wirkung der Federkraft der gespannten Auswurffeder der Fixierbolzen aus den Bohrungen gedrückt wird, wenn das Verriegelungselement erneut in die Ausnehmung eintritt.

Der Erfindung liegt die Aufgabe zugrunde, einen Kugelspannbolzen der eingangs genannten Art so auszubilden, daß nach dem Durchstecken des Fixierbolzens durch die Bohrungen der Platten diese sofort gegeneinander verspannt sind.

Diese Aufgabe wird nach der Erfindung dadurch gelöst, daß der Stößel auf der dem Verriegelungselement abgewandten Seite in eine Stößelkappe eingreift, daß die Stößelkappe eine Anlagefläche zur Anlage an dem Fixierbolzen aufweist, und daß in der Sperrstellung der Abstand der Anlagefläche von dem Fixierbolzen dem Abstand des Verriegelungselements von der geneigt verlaufenden Seitenwand entspricht.

Der erfindungsgemäße Kugelspannbolzen bietet den Vorteil, daß der Stößel so weit verstellt werden kann, daß das Verriegelungselement sich neben der Ausnehmung befindet und dort in der Sperrstellung verharrt. Erst wenn eine oder beide Platten auf den Fixierbolzen aufgeschoben werden bzw. der Fixierbolzen durch die Bohrungen gesteckt wird, wird das Verriegelungselement auf der geneigt verlaufenden Seitenwand in die Ausnehmung hineingedrückt, wobei die zweite Feder gespannt wird, so daß unmittelbar nachdem die Platten das Verriegelungselement passiert haben, die Feder den Stößel wieder zurückziehen und das Verriegelungselement aus der Ausnehmung herausdrücken kann, so daß sich das Verriegelungselement nur für das kurze Zeitintervall des Durchsteckens in der Lösestellung befindet und nach dem Durchstecken des Fixierbolzens durch die Bohrungen der Platten diese sofort unter einer Vorspannung stehen. Da es schwierig ist, den Stößel so zu positionieren, daß das Verriegelungselement sich unmittelbar neben der geneigt verlaufenden Seitenwand der Ausnehmung befindet, ist der Abstand der Anlagefläche von dem Fixierbolzen und der Abstand des Verriegelungselements von der Seitenwand aufeinander abgestimmt. Dadurch wird erreicht, daß beim erstmaligen Betätigen des Stößels das Verriegelungselement aus einer Sperrstellung, in der es gesichert ist und nicht in die Ausnehmung gleiten kann, in eine Stellung überführt wird, aus der es in die Lösestellung verstellt werden kann. Die Bedienung des Kugelspannbolzens wird damit deutlich vereinfacht, da es nicht mehr vom Feingefühl des Operateurs abhängt, das Verriegelungselement unmittelbar neben der Ausnehmung zu positionieren.

Es ist weiterhin vorgesehen, daß der Stößel einen Stößelkopf aufweist, der in einem Sackloch der Stößelkappe angeordnet ist, und daß mit Abstand zu dem Stößelkopf in dem Sackloch ein Ringbund vorhanden ist. Dies bewirkt, daß beim Überführen des Verriegelungselementes in die Lösestellung, bei der die Stößelkappe dem Fixierbolzen bereits anliegt, der Stößelkopf nur um einen festgelegten Betrag relativ zur Stößelkappe verschoben werden kann, so daß das Verriegelungselement in der Ausnehmung nicht zu weit in axialer Richtung verschoben und nach dem Durchtritt des Fixierbolzens durch die Bohrungen der Platten schnell wieder in die Sperrstellung überführt werden kann. Dabei hat es sich als günstig erwiesen, wenn die zweite Feder zwischen dem Stößelkopf und dem Fixierbolzen angeordnet ist.

Vorteilhaft ist es gleichfalls, wenn die geneigt verlaufende Seitenwand verrundet ausgebildet ist, da so der Anfang und das Ende der geneigt verlaufenden Seitenwand relativ steil sind, so daß für den Beginn des Übergangs aus der Sperrstellung in die Lösestellung relativ größere Kräfte benötigt werden, die eine unbeabsichtigte Verstellung verhindern.

Um ein Verkanten des Fixierbolzens in den Bohrungen der Platten zu verhindern sind zwei der Verriegelungselemente vorgesehen, wobei diese als Kugel ausgebildet sind.

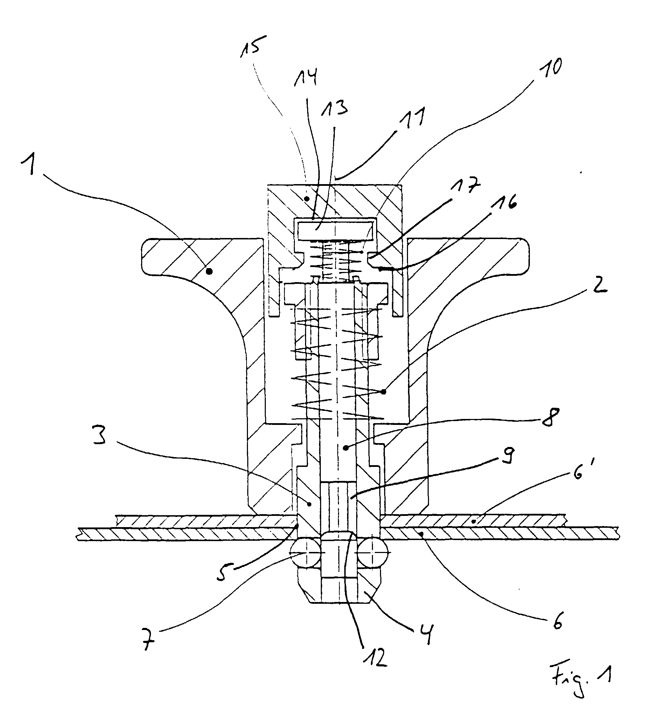

Im folgenden soll die Erfindung an einem in der Zeichnung dargestellten Ausführungsbeispiel näher erläutert werden; die einzige Figur zeigt einen Längsschnitt durch einen erfindungsgemäßen Kugelspannbolzen bei der Verbindung zweier Platten.

Der in der Zeichnung dargestellte Kugelspannbolzen weist einen Griff 1 und einen relativ zum Griff 1 in dessen axialen Richtung gegen die Kraft einer ersten Feder 2 verschiebbaren Fixierbolzen 3 auf. An dem freien Ende 4 des Fixierbolzens 3, das durch die Bohrungen 5 von zwei Platten 6, 6' gesteckt werden kann, um diese miteinander zu verbinden, sind zwei als Kugeln ausgebildete Verriegelungselemente 7 angeordnet. In einer zentralen Bohrung des Fixierbolzens 3 ist relativ zu diesem verschiebbar ein Stößel 8 angeordnet, der an dem dem freien Ende 4 des Fixierbolzens 3 zugewandten Ende eine Ausnehmung 9 aufweist. Der Stößel 8 kann in der zentralen Bohrung so verstellt werden, daß die Verriegelungselemente 7 aus einer in der Zeichnung dargestellten Sperrstellung, in der diese am Außenumfang des Stößels 8 anliegen, in eine Lösestellung überführt werden können, in der die Verriegelungselemente 7 sich in der Ausnehmung 9 befinden.

Zwischen dem Stößel 8 und dem Fixierbolzen 3 ist eine zweite Feder 10 angeordnet. Die Ausnehmung 9 weist auf der dem Verriegelungselement 7 zugewandten Seite eine zur Stößelachse 11 geneigt verlaufende Seitenwand 12 auf, so daß beim Durchstecken des Fixierbolzens 3 durch die Bohrungen 5 der Platten 6, 6' die Verriegelungselemente 7 von den Rändern der Bohrungen 5 in die Ausnehmungen 9 hineingedrückt werden, wobei sie den Stößel 8 gegen die Kraft der zweiten Feder 10 weiter in Richtung des freien Endes 4 des Fixierbolzens 3 ziehen. Nach dem Durchtritt der Verriegelungselemente 7 durch die Bohrungen 5 verstellt sich der Stößel 8 unter der Kraft der zweiten Feder 10 wieder in seine Ausgangslage, wobei die Verriegelungselemente 7 auf der geneigt verlaufenden Seitenwand 12 wieder aus der Ausnehmung 9 herausgedrückt werden.

Der Stößel 8 weist einen Stößelkopf 13 auf, der in einem Sackloch 14 einer Stößelkappe 15 angeordnet ist, die an der dem Fixierbolzen 3 zugewandten Seite eine Anlagefläche 16 aufweist, mit der diese bei Verstellung des Stößels 8 an dem Fixierbolzen 3 zur Anlage kommt, so daß bei weiterer Krafteinwirkung der Fixierbolzen 3 in axialer Richtung verstellt wird. In der Sperrstellung der Verriegelungselemente 7 entspricht dem Abstand der Anlagefläche 16 der Stößelkappe 15 von dem Fixierbolzen 3 dem Abstand des Verriegelungselements 7 von der geneigt verlaufenden Seitenwand 12, so daß bei Betätigung des Stößels 8 die Verriegelungselemente 7 am Rand der Ausnehmung 9 am Anfang der geneigt verlaufenden Seitenwand 12 positoniert werden. Mit Abstand zu dem in dem Sackloch 14 der Stößelkappe 15 angeordneten Stößelkopf 13 ist ein Ringbund 17 vorhanden, durch den die Verstellung des Stößels 8 relativ zur Stößelkappe 15 und damit zu dem Fixierbolzen 3 begrenzt ist.

In dem in der Zeichnung dargestellten Ausführungsbeispiel ist die zweite Feder 10 zwischen dem Stößelkopf 13 und dem Fixierbolzen 3 angeordnet und die geneigt verlaufende Seitenwand 12 verrundet ausgebildet.

## Patentansprüche

1. Kugelspannbolzen zur lösbaren Verbindung zweier jeweils eine Bohrung (5) aufweisender Teile, insb. zweier Platten (6, 6'), mit einem Griff (1), einem durch die Bohrungen (5) durchsteckbaren, relativ zum Griff (1) gegen die Kraft einer ersten Feder (2) verschiebbaren Fixierbolzen (3), der an seinem freien Ende ein Verriegelungselement (7) aufweist, das durch einen relativ zum Fixierbolzen (3) verschiebbaren Stößel (8) aus einer den Durchtritt des Fixierbolzens (3) durch die Bohrungen (5) sperrenden Sperrstellung, in der die beiden Teile zwischen dem Griff (1) und dem Verriegelungselement (7) gehalten sind, in eine den Durchtritt freigebende, in eine Ausnehmung (9) des Stößels (8) reichende Lösestellung verstellbar ist, wobei zwischen dem Stößel (8) und dem Fixierbolzen (3) eine zweite Feder (10) angeordnet ist und die Ausnehmung (9) auf der dem Verriegelungselement (7) zugewandten Seite eine zur Stößelachse (11) geneigt verlaufende Seitenwand (12) aufweist, auf der das Verriegelungselement (7) in die Ausnehmung (9) gleiten kann, dadurch gekennzeichnet, daß der Stößel (8) auf der dem Verriegelungselement (7) abgewandten Seite in eine Stößelkappe (15) eingreift, daß die Stößelkappe (15) eine Anlagefläche (16) zur Anlage an dem Fixierbolzen (3) aufweist, und daß in der Sperrstellung der Abstand der Anlagefläche (16) von dem Fixierbolzen (3) dem Abstand des Verriegelungselements (7) von der geneigt verlaufenden Seitenwand (12) entspricht.

2. Kugelspannbolzen nach Anspruch 1, dadurch gekennzeichnet, daß der Stößel (8) einen Stößelkopf (13) aufweist, der in einem Sackloch (14) der Stößelkappe (15) angeordnet ist, und daß mit Abstand zu dem Stößelkopf (13) in dem Sackloch (14) ein Ringbund (17) vorhanden ist.

3. Kugelspannbolzen nach Anspruch 2, dadurch gekennzeichnet, daß die zweite Feder (10) zwischen dem Stößelkopf (13) und dem Fixierbolzen (3) angeordnet ist.

4. Kugel spannbolzen nach einem der Ansprüche 1 bis 3, dadurch gekennzeichnet, daß die geneigt verlaufende Seitenwand (12) verrundet ausgebildet ist.

5. Kugelspannbolzen nach einem der Ansprüche 1 bis 4, dadurch gekennzeichnet, daß zwei Verriegelungselemente (7) vorgesehen sind.

6. Kugelspannbolzen nach einem der Ansprüche 1 bis 5, dadurch gekennzeichnet, daß das Verriegelungselement (7) als Kugel ausgebildet ist.

## Claims

1. A ball-type clamping pin for releasably connecting two parts which each have a bore (5), in particular two plates (6, 6'), comprising a handle (1), a fixing pin (3) which can be passed through the bores (5) and which is displaceable relative to the handle (1) against the force of a first spring (2) and which at its free end has a locking element (7) which is movable by a plunger (8) displaceable relative to the fixing pin (3) from a blocking position of blocking the passage of the fixing pin (3) through the bores (5), in which blocking position the two parts are held between the handle (1) and the locking element (7), into a release position which enables the passage of the fixing pin (3) through the bores and which extends into an opening (9) in the plunger (8), wherein a second spring (10) is arranged between the plunger (8) and the fixing pin (3) and, on the side towards the locking element (7), the opening (9) has a side wall (12) which extends inclinedly relative to the axis (11) of the plunger and against which the locking element (7) can slide into the opening (9), characterised in that, on the side remote from the locking element (7), the plunger (8) engages into a plunger cap (15), that the plunger cap (15) has a contact surface (16) for bearing against the fixing pin (3), and that in the blocking position the spacing of the contact surface (16) from the fixing pin corresponds to the spacing of the locking element (7) from the inclinedly extending side wall (12).

2. A ball-type clamping pin according to claim 1 characterised in that the plunger (8) has a plunger head (13) which is arranged in a blind hole (14) in the plunger cap (15) and that there is an annular collar (17) at a spacing relative to the plunger head (13) in the blind hole (14).

3. A ball-type clamping pin according to claim 2 characterised in that the second spring (10) is arranged between the plunger head (13) and the fixing pin (3).

4. A ball-type clamping pin according to one of claims 1 to 3 characterised in that the inclinedly extending side wall (12) is of a rounded configuration.

5. A ball-type clamping pin according to one of claims 1 to 4 characterised in that there are provided two locking elements (7).

6. A ball-type clamping pin according to one of claims 1 to 5 characterised in that the locking element (7) is in the form of a ball.

## Revendications

1. Broche de serrage à billes pour assembler de manière démontable deux pièces pourvues chacune d'un trou (5), en particulier de deux plaques (6, 6'), comportant une poignée (1), une tige de blocage (3) qui peut être insérée dans les trous (5), peut coulisser par rapport à la poignée (1) à l'encontre de la force d'un premier ressort (2), et porte à son extrémité libre un élément de verrouillage (7) qui, par l'intermédiaire d'un poussoir (8) coulissant par rapport à la tige de blocage (3), peut être déplacé d'une position verrouillée interdisant le passage de la tige de blocage (3) au travers des trous (5), dans laquelle les deux pièces sont tenues entre la poignée (1) et l'élément de verrouillage (7), dans une position déverrouillée, rentrée dans un évidement (9) du poussoir (8), dans laquelle le passage est libéré, un second ressort (10) étant disposé entre le poussoir (8) et la tige de blocage (3) et l'évidement (9) présentant, du côté tourné vers l'élément de verrouillage (7), une paroi latérale (12) inclinée sur laquelle l'élément de verrouillage (7) peut glisser dans l'évidement (9), caractérisée par le fait que le poussoir (8), du côté opposé à l'élément de verrouillage (7), pénètre dans une coiffe de poussoir (15), par le fait que la coiffe de poussoir (15) comporte une surface d'appui (16) pour l'appui sur la tige de blocage (3) et par le fait que, dans la position verrouillée, la distance entre la surface d'appui (16) et la tige de blocage (3) correspond à la distance entre l'élément de verrouillage (7) et la paroi latérale (12) inclinée.

2. Broche de serrage selon la revendication 1, caractérisée par le fait que le poussoir (8) comporte une tête de poussoir (13) qui est disposée dans un trou non débouchant (14) de la coiffe de poussoir (15) et par le fait qu'un rebord annulaire (17) est prévu dans le trou non débouchant (14), à distance de la tête de poussoir (13).

3. Broche de serrage selon la revendication 2, caractérisée par le fait que le second ressort (10) est disposé entre la tête de poussoir (13) et la tige de blocage (3).

4. Broche de serrage selon une des revendications 1 à 3, caractérisée par le fait que la paroi latérale (12) inclinée est arrondie.

5. Broche de serrage selon une des revendications 1 à 4, caractérisée par le fait qu'il est prévu deux éléments de verrouillage (7).

6. Broche de serrage selon une des revendications 1 à 5, caractérisée par le fait que l'élément de verrouillage (7) est réalisé sous la forme d'une bille.
